# EUROPÄISCHE PATENTSCHRIFT

(11) **EP 2 902 698 B1**
(45) Veröffentlichungstag und Bekanntmachung des Hinweises auf die Patenterteilung: **13.05.2020**
(21) Anmeldenummer: 15153546.5
(22) Anmeldetag: 03.02.2015
(51) Int. Cl.: F21S 8/06, F21V 23/04, H05B 33/08, H05B 37/02, F21W 131/402

(54) **Leuchte**
Luminaire
Éclairage

(30) Priorität: 03.02.2014 CH 1432014
(43) Veröffentlichungstag der Anmeldung: 05.08.2015
(73) Patentinhaber: Regent Beleuchtungskörper AG, 4018 Basel (CH)
(72) Erfinder: Cereghetti, Andreas, 4153 Reinach (CH); Marti, Andreas, 4132 Muttenz (CH)
(74) Vertreter: Braun, André jr.

(56) Entgegenhaltungen:
- EP-A2- 0 299 196
- WO-A1-2010/146446
- WO-A2-2013/121342
- DE-U1- 20 316 756
- DE-U1-202012 103 365
- US-A1- 2009 318 772

## Beschreibung

### Technisches Gebiet

Die Erfindung betrifft eine Leuchte gemäss dem Oberbegriff des unabhängigen Anspruchs 1.

Solche Leuchten mit einem Leuchtmittel, einer Adaptionseinheit zum Anpassen von Abstrahlcharakteristika von mittels des Leuchtmittels erzeugtem Licht, einer Ermittlungseinheit zum Ermitteln eines Umgebungsparameters der Umgebung der Leuchte und einer Steuereinheit zum automatischen Auswerten des Umgebungsparameters und zum Einstellen der Adaptionseinheit auf Grund des ausgewerteten Umgebungsparameters können zum automatisiert angepassten ergonomischen Beleuchten von Räumen und Ausleuchten von Oberflächen eingesetzt werden.

### Stand der Technik

Zur Beleuchtung in Innen- und Aussenräumen werden verschiedenartige Leuchten eingesetzt, die als Wand-, Decken- oder Pendelleuchten an einer Decke oder einer Wand montiert sind oder die als Stehleuchte frei auf dem Boden positioniert sind. Dabei ist es häufig wichtig, dass die Leuchten eine bestimmte Fläche möglichst ideal ausleuchten. Beispielsweise ist es in Büros von Bedeutung, dass Arbeitsflächen wie unter anderem Schreibtischoberflächen gut beleuchtet sind, damit ein angenehmes und ergonomisches Arbeiten möglich ist. Zu diesem Zweck wird angestrebt, eine vordefinierte bevorzugte Ausleuchtung der Arbeitsfläche zu erreichen.

Um die Lichtverteilungskurve (LVK) definieren zu können, sind moderne Leuchten häufig mit vielfältigen Einstellmöglichkeiten ausgestattet. So können die Leuchten von einem Experten oder auch einem geschulten Benutzer exakt eingestellt werden. Zudem weisen moderne Leuchten teilweise auch Steuerungen auf, mit denen gewisse Einstellungen der Leuchten automatisiert erfolgen können. Beispielsweise können solche Steuerungen über einen Bewegungsmelder erfasste Signale als Umgebungsparameter auswerten, wobei eine erkannte Bewegung so interpretiert wird, dass sich eine Person in der Umgebung der Leuchte befindet. Wird also eine Bewegung erkannt, so schaltet die Steuerung die Leuchte ein beziehungsweise lässt die Leuchte eingeschaltet. Wird über einen bestimmten vordefinierten Zeitraum keine Bewegung registriert, so schaltet die Steuerung die Leuchte aus. Oder in einem anderen Beispiel kann eine solche Steuerung ein über einen Helligkeitssensor erfasstes Signal als Umgebungsparameter auswerten. Dabei kann die Steuerung die Helligkeit des von der Leuchte abgestrahlten Lichts der erfassten Umgebungshelligkeit anpassen, siehe z.B. WO2013/121342 A2.

Werden bei solchen Leuchten jedoch die auszuleuchtenden Flächen verändert, hat dies jeweils auch eine Auswirkung auf die möglichst ideale LVK. Dies hat zu Folge, dass bei einer sich ändernden auszuleuchtenden Fläche die LVK der zugehörigen Leuchte nicht mehr wie vordefiniert sein soll, was entweder dazu führt, dass die Fläche nicht mehr bevorzugt ausgeleuchtet ist oder dass die Leuchte neu eingestellt werden muss. Insbesondere von Bedeutung ist dieser Umstand in modernen Büros, die mit höhenverstellbaren Schreibtischen ausgestattet sind. Wird bei einem solchen Schreibtisch die Tischhöhe verstellt, so leuchtet die zugehörige Leuchte die Tischoberfläche nicht mehr wie voreingestellt aus. Ist beispielsweise die Leuchte so eingestellt, dass die Tischoberfläche in einer zum Sitzen angepassten Tischhöhe bevorzugt ausgeleuchtet ist, und wird die Tischhöhe vergrössert, um von einer sitzenden in eine stehende Arbeitshaltung zu wechseln, so ist die Tischoberfläche nicht mehr zweckmässig ausgeleuchtet. Insbesondere ist sie in diesem Beispiel über einen verkleinerten Bereich und in einer zu hohen Intensität ausgeleuchtet.

Vor diesem Hintergrund ist es die Aufgabe der nachfolgenden Erfindung, eine Leuchte vorzuschlagen, die eine bevorzugte Ausleuchtung einer sich örtlich verändernden auszuleuchtenden Fläche beibehalten kann.

### Darstellung der Erfindung

Die Aufgabe wird erfindungsgemäss durch eine Leuchte gelöst, wie sie im unabhängigen Patentanspruch 1 definiert ist. Vorteilhafte Ausführungsvarianten der erfindungsgemässen Leuchte ergeben sich aus den abhängigen Patentansprüchen.

Das Wesen der Erfindung besteht im Folgenden: Eine Steh-, Pendel- oder Anbauleuchte umfasst eine Tragstruktur und ein an der Tragstruktur befestigtes Gehäuse, in dem ein Leuchtmittel, eine Adaptionseinheit zum Anpassen von Abstrahlcharakteristika von mittels des Leuchtmittels erzeugtem Licht, eine Ermittlungseinheit zum Ermitteln eines Umgebungsparameters der Umgebung der Leuchte und eine Steuereinheit zum automatischen Auswerten des Umgebungsparameters und zum Einstellen der Adaptionseinheit auf Grund des ausgewerteten Umgebungsparameters angeordnet sind. Dabei ist die Steuereinheit dazu ausgestaltet, aus dem Umgebungsparameter einen Abstand zwischen dem Leuchtmittel und einer Oberfläche abzuleiten und die Adaptionseinheit auf Grund des abgeleiteten Abstands automatisch einzustellen.

In der nachfolgenden Beschreibung wird die Steh-, Pendel- oder Anbauleuchte der Einfachheit halber teilsweise als Leuchte bezeichnet. Der Begriff "Leuchte" ist also im Folgenden synonym zum Begriff "Steh-, Pendel- oder Anbauleuchte" zu verstehen.

Die Tragstruktur kann ein auf einem Boden beispielsweise mittels eines Fusses abstellbarer Ständer sein, an dem das Gehäuse montiert ist. Alternativ dazu kann sie eine Hängeeinrichtung zum schwebenden Aufhängen des Gehäuses an einer Decke oder dergleichen sein. Oder sie kann als ein Anbauelement ausgebildet sein, mit dem das Gehäuse direkt an der Decke oder einer Wand befestigt werden kann.

Das Gehäuse kann aus einem beliebeigen geeigneten Material wie beispielsweise Aluminium, Stahlblech oder einem Kunststoff hergestellt sein. Auf einer Seite, aus der Licht aus der Leuchte abgestrahlt wird, kann das Gehäuse offen oder beispielsweise mittels eines Diffusors transparent ausgebildet sein. Das Gehäuse kann insbesondere verschiedene Komponenten der Leuchte, wie beispielsweise das Leuchtmittel, die Adaptionseinheit, die Ermittlungseinheit und die Steuereinheit beinhalten. Gewisse Komponenten oder Teile davon können auch an der Aussenseite des Gehäuses angebracht sein. Auf jeden Fall bildet das Gehäuse zusammen mit den erwähnten Komponenten eine Einheit.

Das Leuchtmittel kann ein LED-Leuchtmittel und insbesondere eine Platine mit einer Mehrzahl von Leuchtdioden beziehungsweise ein LED-Cluster sein. Die Adaptionseinheit kann einen Refraktor, einen Reflektor und/oder eine Linse umfassen.

Die Steuereinheit kann eine Recheneinheit mit einem Prozessor und einem Arbeitsspeicher umfassen. Dabei kann die Steuereinheit erfindungsgemäss zum Ableiten des Abstands aus dem Umgebungsparameter und zum Einstellen der Adaptionseinheit auf Grund des abgeleiteten Abstands ausgestaltet sein, indem die Recheneinheit entsprechend programmiert ist. Dazu kann die Recheneinheit beispielsweise ein Programm ausführen. Alternativ oder zusätzlich zu der Recheneinheit kann die Steuereinheit eine entsprechend ausgestaltete Schaltung aufweisen.

Damit aus dem Umgebungsparameter der Abstand zwischen dem Leuchtmittel und einer Oberfläche effizient ableitbar ist, kann die Ermittlungseinheit dazu ausgestaltet sein, einen Umgebungsparameter zu ermitteln, der in einem Zusammenhang mit dem Abstand zwischen dem Leuchtmittel und der Oberfläche steht. Beispielsweise kann sie dazu ausgestaltet sein, einen Abstand zu messen oder eine Tischhöhe zu erfassen.

Der Begriff "Umgebung der Leuchte" kann sich im Zusammenhang mit der Erfindung auf einen Einflussbereich der Leuchte beziehungsweise einen Einflussbereich auf die Leuchte beziehen. Insbesondere kann er sich auf einen Bereich beziehen, der für eine Einstellung der Leuchte wie beispielsweise deren Lichtverteilungskurve (LVK) oder deren Helligkeit von Bedeutung ist.

Der Umgebungsparameter kann direkt dem Abstand zwischen dem Leuchtmittel beziehungsweise der Leuchte und der Oberfläche entsprechen. In einer solchen Ausführung kann sich das Ableiten des Abstands aus dem Umgebungsparameter auf ein Übernehmen des Umgebungsparameters als Abstand beziehen.

Der Begriff "Abstrahlcharakteristika" im Zusammenhang mit der erfindungsgemässen Leuchte bezieht sich auf Eigenschaften des mittels der Leuchte beziehungsweise des Leuchtmittels erzeugten Lichts wie beispielsweise dessen Streuung, Helligkeit, Dämpfung, Strahlrichtung, Fokussierung und/oder Farbe beziehungsweise Ton. Gewisse oder alle der Abstrahlcharakteristika können die Lichtverteilungskurve (LVK) der Leuchte auf der Oberfläche festlegen.

Der Umgebungsparameter kann neben der Information zum Ableiten des Abstands zwischen dem Leuchtmittel und der Oberfläche auch noch weitere Informationen umfassen. Beispielsweise können solche weitere Informationen eine von der Leuchte unabhängige Umgebungshelligkeit und/oder eine Bewegungsmeldung aus der Umgebung der Leuchte betreffen. Die Oberfläche kann insbesondere einer mit der Leuchte auszuleuchtenden Fläche umfassen beziehungsweise entsprechen.

Die erfindungsgemässe Leuchte ermöglicht, dass die Abstrahlcharakteristika der Leuchte und insbesondere deren LVK automatisch angepasst werden, wenn der Abstand zwischen den Leuchtmitteln und der Oberfläche ändert. Dies kann insbesondere vorteilhaft sein, wenn die Oberfläche in Bezug auf die Leuchte bewegbar ist. Auf diese Weise kann die Oberfläche bevorzugt automatisiert konstant bevorzugt ausgeleuchtet werden, auch wenn die Oberfläche in Bezug auf die Leuchte verschoben beziehungsweise bewegt wird.

Vorzugsweise ist die Leuchte dazu ausgelegt, dass die Oberfläche einer Tischoberfläche, einem Boden und/oder einer Decke entspricht. Die Leuchte kann dazu ausgelegt werden, indem ihre Gestalt und Abstrahlcharakteristika so bemessen sind, dass sie für den jeweiligen Anwendungszweck angepasst sind. Beispielsweise können bei einer Büroleuchte der Abstrahlwinkel und der Fokus so ausgelegt sein, dass eine Schreibtischoberfläche zum arbeiten so ideal wie möglich ausgeleuchtet werden kann.

Indem der Abstand zu einer Tischoberfläche ermittelt und ausgewertet wird, kann das Licht so eingestellt werden, dass eine optimierte Ausleuchtung auf dem Tisch auch bei ändernder Tischhöhe erhalten werden kann. Dies kann insbesondere bei höhenverstellbaren Tischen, die beispielsweise im Sitzen und im Stehen verwendet werden, vorteilhaft sein. In einer Ausführung kann die Leuchte sowohl eine Tischoberfläche als auch eine Decke beleuchten. Dabei kann sie beispielsweise an einem höhenverstellbaren Tisch befestigt sein, so dass der Abstand zwischen Tischoberfläche und Leuchte konstant ist, auch wenn die Tischhöhe verändert wird. Die Oberfläche kann dabei jedoch der Decke entsprechen, so dass die Ausleuchtung der Decke angepasst werden kann, wenn die Tischhöhe und damit der Abstand zwischen Leuchte und Decke verändert wird. Analog dazu kann die Ausleuchtung eines Bodens angepasst werden, wenn die Leuchte zusätzlich oder alternativ zur Tischoberfläche und eventuell Decke auch noch den Boden ausleuchten soll.

Die Ermittlungseinheit umfasst eine Messeinrichtung zum Messen des Abstands zwischen der Oberfläche und dem Leuchtmittel. Eine solche Messeinrichtung ermöglicht, dass laufend oder zyklisch der Abstand zwischen der Oberfläche und dem Leuchtmittel gemessen und überwacht werden kann.

In einer bevorzugten Ausführungsform der Leuchte umfasst die Messeinrichtung der Ermittlungseinheit dabei ein Lichtmodul. Das Lichtmodul kann einen Lichtsender und einen Lichtempfänger aufweisen. Das gesendete Licht kann ein Laser sein. Es kann eine Wellenlänge im Infrarotbereich oder im Bereich nahe Infrarot (NIR) aufweisen. Das Lichtmodul kann also ein Infrarot- und/oder Lasermodul sein. Der Abstand zwischen Messeinrichtung und Oberfläche kann damit ermittelt werden, indem die Zeit gemessen wird, die das Licht vom Lichtsender bis zur Oberfläche und von dort per Reflexion zum Lichtempfänger benötigt. Solche Lichtmodule sind in unterschiedlichen Ausführungen aus verschiedenen Anwendungen hinlänglich bekannt und bewährt. Sie erlauben ein schnelles und exaktes Messen des Abstands zu einem Objekt wie beispielsweise der Oberfläche.

In einer weiteren bevorzugten Ausführungsform umfasst die Messeinrichtung der Ermittlungseinheit dabei ein Ultraschallmodul. Alternativ oder ergänzend dazu kann die Messeinrichtung auch ein Radarmodul umfassen. Das Ultraschallmodul kann einen Ultraschallsender und einen Ultraschallempfänger aufweisen. Der Abstand zwischen Messeinrichtung und Oberfläche kann damit ähnlich dem Lichtmodul ermittelt werden, indem die Zeit gemessen wird, die ein Ultraschallsignal vom Ultraschallsender bis zur Oberfläche und von dort per Reflexion zum Ultraschallempfänger benötigt. Solche Ultraschallmodule sind ebenfalls aus verschiedenen Anwendungen hinlänglich bekannt und erlauben ein schnelles und exaktes Messen des Abstands zu einem Objekt wie beispielsweise der Oberfläche.

Bevorzugt weist die Ermittlungseinheit eine Schnittstelle zu einem höhenverstellbaren Tisch auf, über die ein eine aktuelle Tischhöhe repräsentierendes Signal als Umgebungsparameter vom höhenverstellbaren Tisch an die Leuchte übermittelbar ist, wobei die Steuereinheit dazu ausgestaltet ist, aus dem Umgebungsparameter über die Tischhöhe den Abstand zwischen dem Leuchtmittel und der Oberfläche abzuleiten. Mittels der Tischhöhe kann die Steuereinheit so den Abstand zwischen der Tischplatte als Oberfläche und dem Leuchtmittel ermitteln. Die Schnittstelle kann einen Stecker zum Verbinden mit dem Tisch über ein Kabel oder einen Funkempfänger beziehungsweise einen Infrarotempfänger zum kabellosen Verbinden mit dem Tisch aufweisen. Auf diese Weise kann der Umgebungsparameter auf einfache Weise übernommen werden, was eine zusätzliche Messung oder dergleichen unnötig machen kann.

Vorzugsweise umfasst die Adaptionseinheit einen Reflektor, wobei die Steuereinheit mit dem Reflektor verbunden ist und der Reflektor von der Steuereinheit einstellbar ist. Mittels eines solchen Reflektors kann die Lichtauslenkung, Fokus und Abstrahlwinkel der Leuchte bestimmt und eingestellt werden. Insbesondere kann die ausgeleuchtete Fläche beziehungsweise LVK bevorzugt gehalten beziehungsweise angepasst werden, auch wenn sich der Abstand zwischen der Leuchte vergrössert beziehungsweise verkleinert. Dies ermöglicht ein effizientes Anpassen des abgestrahlten Lichts bei änderndem Abstand.

Vorzugsweise umfasst das Leuchtmittel einen LED-Cluster und die Adaptionseinheit Zu- und Ausschalter für bestimmte Gruppen von Leuchtdioden des LED-Clusters, wobei die Steuereinheit mit den Zu- und Ausschaltern verbunden ist und die Zu- und Ausschalter von der Steuereinheit einstellbar sind. Der Begriff "Zu- und Ausschalter" bezieht sich in diesem Zusammenhang auf eine Einrichtung, mit der die Gruppen von Leuchtdioden zu- und ausgeschaltet werden können. Dies kann auch fliessend erfolgen, so dass die Zu- und Ausschalter zur selektiven Dämmung des von den Gruppen abgestrahlten Lichts eingesetzt werden kann. Über das Einstellen der Zu- und Ausschalter der Adaptionseinheit können ein Abstrahlwinkel beziehungsweise eine Lichtauslenkung, eine Verschiebung eines Lichtstrompakets und/oder ein Indirektlichtstrom der Leuchte beispielsweise zur Anpassung des Verhältnisses von Direkt- zu Indirektlicht effizient eingestellt werden. Insbesondere kann die ausgeleuchtete Fläche beziehungsweise LVK bevorzugt gehalten beziehungsweise angepasst werden, auch wenn sich der Abstand zwischen der Leuchte vergrössert beziehungsweise verkleinert.

Vorzugsweise umfasst die Adaptionseinheit einen Helligkeitsregler zum Regeln der Abstrahlhelligkeit des Leuchtmittels, wobei die Steuereinheit mit dem Helligkeitsregler verbunden ist und der Helligkeitsregler von der Steuereinheit einstellbar ist. Auf diese Weise kann das abgestrahlte Licht effizient angepasst werden. Insbesondere kann erreicht werden, dass die Helligkeit auch bei einem sich vergrössernden Abstand ausreicht.

Vorzugsweise umfasst die Adaptionseinheit einen Intensitätsregler zum Regeln der Abstrahlintensität des Leuchtmittels, wobei die Steuereinheit mit dem Intensitätsregler verbunden ist und der Intensitätsregler von der Steuereinheit einstellbar ist. Auf diese Weise kann das abgestrahlte Licht effizient angepasst werden. Insbesondere kann erreicht werden, dass die Intensität auch bei einem sich vergrössernden Abstand ausreicht.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere wird im Folgenden die erfindungsgemässe Leuchte unter Bezugnahme auf die beigefügten Zeichnungen anhand von Ausführungsbeispielen detaillierter beschrieben. Es zeigen:
- Fig. 1: eine schematische seitliche Ansicht einer Pendelleuchte als erstes Ausführungsbeispiel einer erfindungsgemässen Leuchte in einer ersten Position;
- Fig. 2: eine schematische seitliche Ansicht der Pendelleuchte von Fig. 1 in einer zweiten Position;
- Fig. 3: eine schematische seitliche Ansicht einer Stehleuchte als zweites Ausführungsbeispiel einer erfindungsgemässen Leuchte in einer ersten Position;
- Fig. 4: eine schematische seitliche Ansicht der Stehleuchte von Fig. 3 in einer zweiten Position;
- Fig. 5: eine schematische seitliche Ansicht einer Pendelleuchte als drittes Ausführungsbeispiel einer erfindungsgemässen Leuchte; und
- Fig. 6: eine schematische Ansicht von unten an die Leuchte von Fig. 5.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach aussen" bezeichnen Richtungen hin zum oder weg vom geometrischen Mittelpunkt der Leuchte sowie benannter Teile derselben. Die Terminologie umfasst die oben ausdrücklich erwähnten Wörter, Ableitungen von denselben und Wörter ähnlicher Bedeutung.

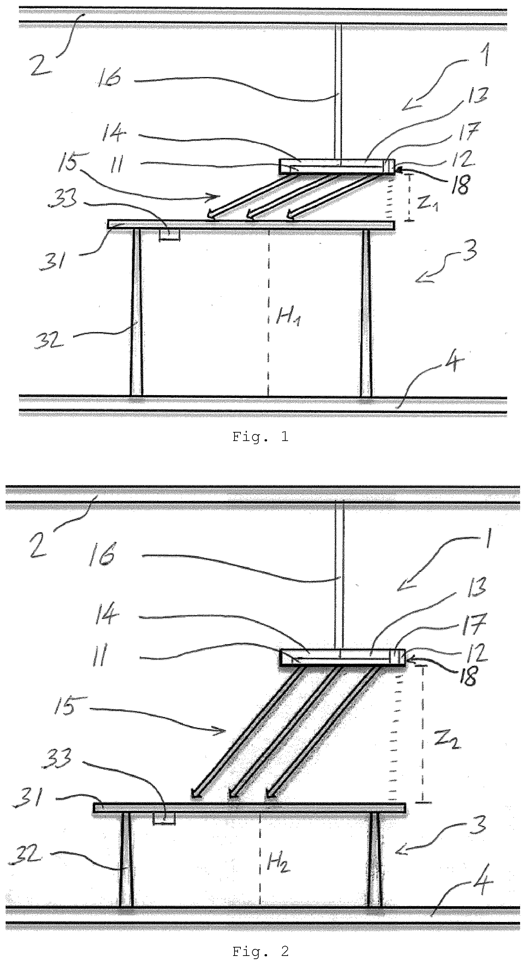

In Fig. 1 ist eine Pendelleuchte 1 als erstes Ausführungsbeispiel einer erfindungsgemässen Steh-, Pendel- oder Anbauleuchte gezeigt. Die Pendelleuchte 1 weist ein Gehäuse 18 und eine Deckenbefestigung 16 als Tragstruktur auf, über die das Gehäuse 18 in einem festen Abstand an einer Decke 2 befestigt ist. Im Gehäuse 18 umfasst die Pendelleuchte 1 Leuchtmittel 11, eine Ermittlungseinheit mit einer Messeinrichtung 12 und einer Schnittstelle 17, eine Steuereinheit 13 mit einer einen Prozessor und einen Arbeitsspeicher aufweisenden Recheneinheit und eine Adaptionseinheit 14 mit einem Reflektor und einem Helligkeitsregler. Die Leuchtmittel 11, die Messeinrichtung 12, die Steuereinheit 13, die Schnittstelle 17 und die Adaptionseinheit 14 sind also im Gehäuse 18 montiert. Dabei ist das Gehäuse 18 nach unten transparent ausgestaltet, so dass die Leuchtmittel 11 Licht 15 direkt und/oder indirekt nach unten abstrahlen können.

Unterhalb der Pendelleuchte 1 ist ein Schreibtisch 3 auf einen Boden 4 gestellt. Der Schreibtisch 3 weist automatisiert höhenverstellbare Beine 32 und eine auf den Beinen 32 angeordnete Tischplatte 31 auf. An einer Unterseite der Tischplatte 31 ist eine Funkschnittstelle 33 befestigt. In der Fig. 1 ist der Schreibtisch 3 in einer ersten zum stehenden Arbeiten vorgesehenen Position gezeigt, in der die Beine 32 verhältnismässig lang sind, so dass die Tischplatte 31 verhältnismässig hoch ist und dass der Schreibtisch eine verhältnismässig grosse erste Tischhöhe H₁ aufweist. Die erste Tischhöhe H₁ wird als Umgebungsparameter per Funk von der Funkschnittstelle 33 an die Schnittstelle 17 der Leuchte 1 übermittelt. Die Steuereinheit 13 ist dazu programmiert, die erste Tischhöhe H₁ auszuwerten, wobei sie dabei insbesondere aus der erste Tischhöhe H₁ einen Abstand zwischen den Leuchtmitteln 11 und der Tischplatte 31 berechnet.

Die Pendelleuchte 1 ist so eingestellt, dass das Licht 15 mit einer bevorzugten Lichtverteilungskurve (LVK) eine Oberfläche der Tischplatte 31 ausleuchtet. Dazu wird das Licht 15 mit einer bestimmten Intensität, in einer bestimmten Helligkeit, in einem bestimmten Winkel schräg von der Pendelleuchte 1 mit einem bestimmten Fokus auf die Tischplatte 31 abgestrahlt.

Die Messeinrichtung 12 der Ermittlungseinheit weist ein Ultraschallmodul beziehungsweise eine Infrarotmodul auf, mit der ein erster Abstand z₁ zwischen der Pendelleuchte 1 und der Oberfläche der Tischplatte 31 als Umgebungsparameter gemessen wird. Die Steuereinheit 13 ist dazu programmiert, den ersten Abstand z₁ auszuwerten. Dabei kann sie den ersten Abstand z₁ zusammen mit oder alternativ zu dem aus der ersten Tischhöhe H₁ berechneten Abstand zwischen der Pendelleuchte 1 und der Tischplatte 31 einsetzen. Dieses zweifache Bestimmen des Abstands zwischen Oberfläche der Tischplatte 31 und Leuchte 1 ermöglicht insbesondere eine Verifizierung und Verbesserung der Abstandsdaten, eine möglichst schnelle Ermittlung des Abstands sowie eine Ermittlung des Abstands auch in Fällen, in denen der Schreibtisch 3 keine Mittel zur Übermittlung der Tischhöhe aufweist.

Für die weitere Beschreibung der Zeichnungen gilt folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen.

Fig. 2 zeigt den Schreibtisch 3 in einer zweiten zum sitzenden Arbeiten vorgesehenen Position, in der die Beine 32 verhältnismässig kurz sind, so dass die Tischplatte 31 verhältnismässig tief ist und dass der Schreibtisch 3 eine verhältnismässig kleine zweite Tischhöhe H₂ aufweist. Die zweite Tischhöhe H₂ wird als Umgebungsparameter per Funk von der Funkschnittstelle 33 an die Schnittstelle 17 der Leuchte 1 übermittelt. Gleichzeitig misst die Messeinrichtung 12 einen zweiten Abstand z₂ zwischen der Pendelleuchte 1 und der Oberfläche der Tischplatte 31 als Umgebungsparameter.

Die Steuereinheit 13 ist dazu programmiert, die Umgebungsparameter z₂ und H₂ auszuwerten und daraus einen Abstand zwischen den Leuchtmitteln 11 und der Oberfläche der Tischplatte 31 abzuleiten. Zudem ist sie mit der Adaptionseinheit 14 verbunden und dazu programmiert, die Adaptionseinheit 14 auf Grund des abgeleiteten Abstands einzustellen. Insbesondere werden dabei der Reflektor und der Helligkeitsregler der Adaptionseinheit 14 so eingestellt, dass die LVK des Lichts 15 auf der Oberfläche der Tischplatte 31 aus der Position von Fig. 1 so gut wie möglich beibehalten wird. Dazu wird die Helligkeit des Lichts 15 der Leuchtmittel 11 auf Grund des grösseren zweiten Abstands z₂ erhöht, der Abstrahlwinkel des Lichts 15 auf Grund des grösseren zweiten Abstands z₂ vergrössert und eventuell weitere Abstrahlcharakteristika wie beispielsweise die Streuung, der Fokus und dergleichen angepasst.

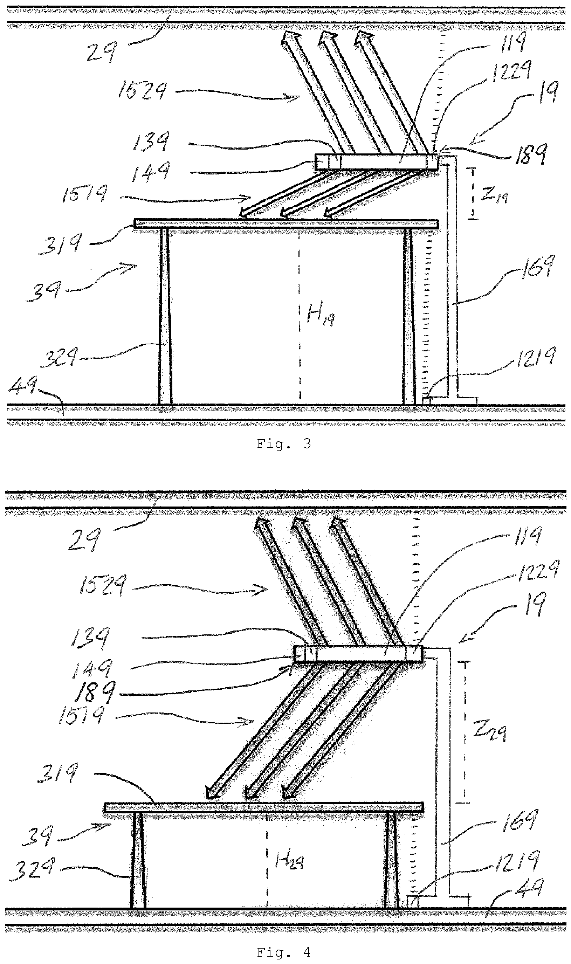

In Fig. 3 ist eine Stehleuchte 19 als zweites Ausführungsbeispiel einer erfindungsgemässen Steh-, Pendel- oder Anbauleuchte gezeigt. Die Stehleuchte 19 weist eine Ständerkonstruktion 169 mit einem Fuss als Tragstruktur auf, über die sie in einem festen Abstand auf einem Boden 49 abgestellt ist. An der dem Fuss abgewandten Ende der Ständerkonstruktion 169 ist ein Gehäuse 189 montiert. Die Stehleuchte 19 umfasst Leuchtmittel 119, eine Ermittlungseinheit mit einer ersten Messeinrichtung 1219 im Fuss der Ständerkonstruktion 169 und einer zweiten Messeinrichtung 1229 im Gehäuse 189, eine Steuereinheit 139 mit einer einen Prozessor und einen Arbeitsspeicher aufweisenden Recheneinheit und eine Adaptionseinheit 149 mit einem Reflektor und einem Helligkeitsregler. Die Leuchtmittel 119, die zweite Messeinrichtung 1229, die Steuereinheit 139 und die Adaptionseinheit 149 sind im Gehäuse 189 angeordnet. Dabei ist das Gehäuse 189 nach unten und nach oben transparent ausgestaltet, so dass die Leuchtmittel 119 erstes Licht 1519 nach unten und zweites Licht 1529 nach oben abstrahlen können.

Unterhalb des Gehäuses 189 und neben der Ständerkonstruktion 169 der Stehleuchte 19 ist ein Schreibtisch 39 auf dem Boden 49 abgestellt. Der Schreibtisch 39 weist höhenverstellbare Beine 329 und eine auf den Beinen 329 angeordnete Tischplatte 319 auf. Der Schreibtisch 39 befindet sich in einer ersten zum stehenden Arbeiten vorgesehenen Position, in der die Beine 329 verhältnismässig lang sind, so dass die Tischplatte 319 verhältnismässig hoch ist und dass der Schreibtisch 39 eine verhältnismässig grosse erste Tischhöhe H₁₉ aufweist.

Die Stehleuchte 19 ist so eingestellt, dass das von den Leuchtmitteln 119 erzeugte erste Licht 1519 mit einer bevorzugten LVK eine Oberfläche der Tischplatte 319 ausleuchtet. Dazu wird das erste Licht 1519 mit einer bestimmten Intensität, in einer bestimmten Helligkeit, in einem bestimmten Winkel mit einem bestimmten Fokus schräg von den Leuchtmitteln 119 auf die Tischplatte 319 abgestrahlt. Zudem ist die Stehleuchte 19 so eingestellt, dass das von den Leuchtmitteln 119 erzeugte zweite Licht 1529 mit einer bevorzugten LVK eine Decke 29 ausleuchtet. Dazu wird das zweite Licht 1529 mit einer bestimmten Intensität, in einer bestimmten Helligkeit, in einem bestimmten Winkel schräg von den Leuchtmitteln 119 an die Decke 29 abgestrahlt.

Die erste Messeinrichtung 1219 und die zweite Messeinrichtung 1229 der Ermittlungseinheit weisen jeweils ein Ultraschallmodul beziehungsweise eine Infrarotmodul auf. Mit der ersten Messeinrichtung 1219 wird die Tischhöhe H₁₉ als Umgebungsparameter vom Fuss der Ständerkonstruktion 169 also von unten her gemessen. Mit der zweiten Messeinrichtung 1229 wird ein Abstand zwischen dem Gehäuse 189 und der Decke 29 gemessen. Die Steuereinheit 139 ist dazu programmiert, die erste Tischhöhe H₁₉ auszuwerten, wobei sie dabei insbesondere aus der erste Tischhöhe H₁₉ einen ersten Abstand z₁₉ zwischen den Leuchtmitteln 119 und der Tischplatte 319 berechnet.

Fig. 4 zeigt den Schreibtisch 39 in einer zweiten zum sitzenden Arbeiten vorgesehenen Position, in der die Beine 329 verhältnismässig kurz sind, so dass die Tischplatte 319 verhältnismässig tief ist und dass der Schreibtisch 39 eine verhältnismässig kleine zweite Tischhöhe H₂₉ aufweist. Die zweite Tischhöhe H₂₉ wird als Umgebungsparameter von der zweiten Messeinrichtung 1229 gemessen.

Die Steuereinheit 139 ist dazu programmiert, den Umgebungsparameter H₂₉ auszuwerten und daraus einen zweiten Abstand z₂₉ zwischen den Leuchtmitteln 119 und der Oberfläche der Tischplatte 319 abzuleiten. Zudem ist sie mit der Adaptionseinheit 149 verbunden und dazu programmiert, die Adaptionseinheit 149 auf Grund des abgeleiteten Abstands einzustellen. Insbesondere werden dabei der Reflektor und der Helligkeitsregler der Adaptionseinheit 149 so eingestellt, dass die LVK des ersten Lichts 1519 auf der Oberfläche der Tischplatte 319 aus der Position von Fig. 1 so gut wie möglich beibehalten wird und dass die LVK des zweiten Lichts 1529 an der Decke 29 angepasst wird. Dazu wird die Helligkeit des ersten Lichts 1519 auf Grund des grösseren zweiten Abstands erhöht, der Abstrahlwinkel des ersten Lichts 1519 auf Grund des grösseren zweiten Abstands z₂₉ vergrössert und eventuell weitere Abstrahlcharakteristika wie beispielsweise die Streuung, der Fokus und dergleichen angepasst.

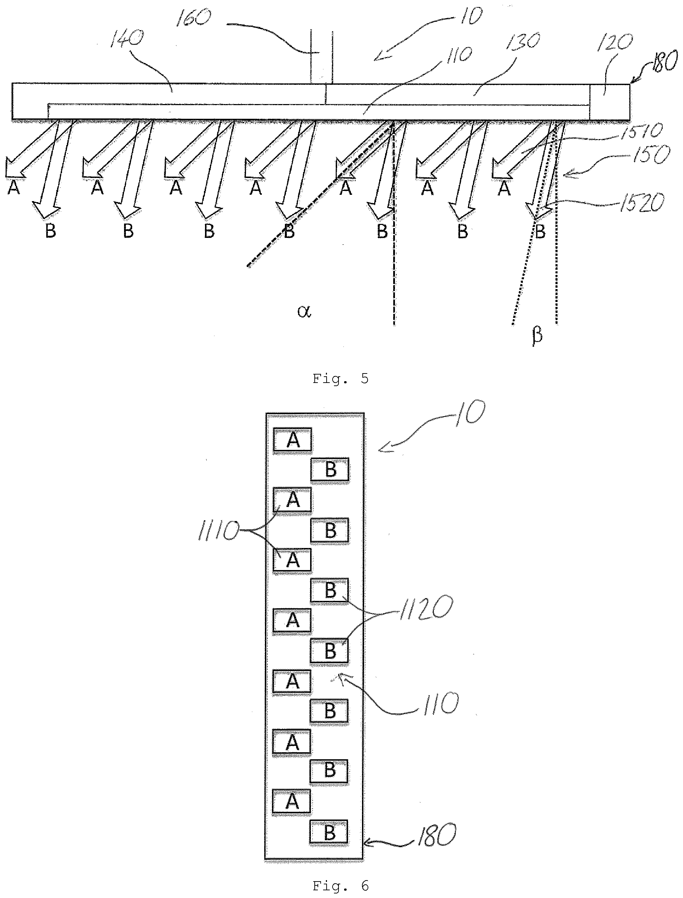

In Fig. 5 und Fig. 6 ist eine Hängeleuchte 10 als drittes Ausführungsbeispiel einer erfindungsgemässen Steh-, Pendel- oder Anbauleuchte gezeigt. Die Hängeleuchte 10 weist eine Aufhängekonstruktion 160 als Tragstruktur auf, über die sie beispielsweise an einer Decke oder an einem Rahmen aufgehängt werden kann. Die Hängeleuchte 10 umfasst ein Gehäuse, in dem LED-Leuchtmittel 110, eine Ermittlungseinheit mit einer Messeinrichtung 120, eine Steuereinheit 130 mit einer einen Prozessor und einen Arbeitsspeicher aufweisenden Recheneinheit und eine Adaptionseinheit 140 mit Zu- und Ausschalter angeordnet sind. Die LED-Leuchtmittel 110, die Messeinrichtung 120, die Steuereinheit 130 und die Adaptionseinheit 140 sind also im Gehäuse 180 gefasst. Dabei ist das Gehäuse 180 nach unten transparent ausgestaltet, so dass die LED-Leuchtmittel 110 Licht 150 nach unten abstrahlen können.

Wie insbesondere in Fig. 6 ersichtlich umfassen die LED-Leuchtmittel 110 einen LED-Cluster, der eine erste LED-Gruppe A mit ersten LED-Leuchtmitteln 1510 und eine zweite LED-Gruppe B mit zweiten LED-Leuchtmitteln 1520 aufweist. Wie in Fig. 5 dargestellt, ist die erste LED-Gruppe A dazu ausgestaltet, einen ersten Lichtanteil 1510 des Lichts 150 in einer Richtung A abzustrahlen. Die Richtung A des ersten Lichtanteils 1510 umschreibt dabei einen ersten Abstrahlwinkel α. Die zweite LED-Gruppe B ist dazu ausgestaltet, einen zweiten Lichtanteil 1520 des Lichts 150 in einer Richtung B abzustrahlen. Die Richtung B des zweiten Lichtanteils 1520 umschreibt dabei einen zweiten Abstrahlwinkel β. Der erste Abstrahlwinkel α ist grösser als der zweite Abstrahlwinkel β.

Die Steuereinheit 130 ist dazu programmiert, mittels der Ermittlungseinheit ermittelte Umgebungsparameter auszuwerten und daraus einen Abstand zwischen den Leuchtmitteln 110 und einer mit einer bevorzugten LVK auszuleuchtenden Oberfläche abzuleiten. Zudem ist sie mit der Adaptionseinheit 140 verbunden und dazu programmiert, die Adaptionseinheit 140 auf Grund des abgeleiteten Abstands einzustellen. Insbesondere werden dabei die Zu- und Ausschalter der Adaptionseinheit 140 so eingestellt, dass Abstrahlwinkel des Lichts 150 zur möglichst guten Beibehaltung der LVK des Lichts 150 angepasst werden. Dazu kann auch die Helligkeit des Lichts 150 und weitere Abstrahlcharakteristika angepasst werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen von deren Merkmalen vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfassen sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder - bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

1. Steh-, Pendel- oder Anbauleuchte (1; 10; 19) mit einer Tragstruktur (16; 160; 169) und einem an der Tragstruktur (16; 160; 169) befestigten Gehäuse (18), in dem ein Leuchtmittel (11; 110; 119), eine Adaptionseinheit (14; 140; 149) zum Anpassen von Abstrahlcharakteristika von mittels des Leuchtmittels (11; 110; 119) erzeugtem Licht (15; 150; 159), eine Ermittlungseinheit (12; 120; 129) zum Ermitteln eines Umgebungsparameters der Umgebung der Leuchte (1; 10; 19) und eine Steuereinheit (13; 130; 139) zum automatischen Auswerten des Umgebungsparameters und zum Einstellen der Adaptionseinheit (14; 140; 149) auf Grund des ausgewerteten Umgebungsparameters angeordnet sind, **dadurch gekennzeichnet, dass**
das Gehäuse (18) zusammen mit dem Leuchtmittel (11; 110; 119), der Adaptionseinheit (14; 140; 149), der Ermittlungseinheit (12; 120; 129) und der Steuereinheit (13; 130; 139) eine Einheit bildet,
die Steuereinheit (13; 130; 139) dazu ausgestaltet ist, aus dem Umgebungsparameter einen Abstand zwischen dem Leuchtmittel (11; 110; 119) und einer höhenverstellbaren Oberfläche abzuleiten, wobei die Ermittlungseinheit mittels einer Messeinrichtung einen ersten Abstand (z1) bei einer ersten Position der Oberfläche und einen zweiten Abstand (z2) bei einer zweiten, im Verhältnis zur ersten Position in der Höhe verstellten Position der Oberfläche misst, und
die Steuereinheit (13; 130; 139) die Adaptionseinheit (14; 140; 149) auf Grund der abgeleiteten Abstände (zl; z2) automatisch einstellt.

2. Steh-, Pendel- oder Anbauleuchte (1; 10; 19) gemäss Anspruch 1, die dazu ausgelegt ist, dass die Oberfläche einer Tischoberfläche, einem Boden und/oder einer Decke entspricht.

3. Steh-, Pendel- oder Anbauleuchte (1; 10; 19) gemäss Anspruch 3, bei der die Messeinrichtung (12; 120; 129) der Ermittlungseinheit (12; 120; 129) ein Lichtmodul umfasst.

4. Steh-, Pendel- oder Anbauleuchte (1; 10; 19) gemäss Anspruch 3 oder 4, bei der die Messeinrichtung (12; 120; 129) der Ermittlungseinheit (12; 120; 129) ein Ultraschallmodul umfasst.

5. Steh-, Pendel- oder Anbauleuchte (1; 10; 19) gemäss einem der vorangehenden Ansprüche, bei der die Ermittlungseinheit (12; 120; 129) eine Schnittstelle (17) zu einem höhenverstellbaren Tisch (13; 130; 139) aufweist, über die ein eine aktuelle Tischhöhe repräsentierendes Signal als Umgebungsparameter vom höhenverstellbaren Tisch (13; 130; 139) an die Leuchte (1; 10; 19) übermittelbar ist, wobei die Steuereinheit (13; 130; 139) dazu ausgestaltet ist, aus dem Umgebungsparameter über die Tischhöhe den Abstand zwischen dem Leuchtmittel (11; 110; 119) und der Oberfläche abzuleiten.

6. Steh-, Pendel- oder Anbauleuchte (1; 10; 19) gemäss einem der vorangehenden Ansprüche, bei der die Adaptionseinheit (14; 140; 149) einen Reflektor umfasst, wobei die Steuereinheit (13; 130; 139) mit dem Reflektor verbunden ist und der Reflektor von der Steuereinheit (13; 130; 139) einstellbar ist.

7. Steh-, Pendel- oder Anbauleuchte (1; 10; 19) gemäss einem der vorangehenden Ansprüche, bei der das Leuchtmittel (11; 110; 119) einen LED-Cluster (1110, 1120) und die Adaptionseinheit (14; 140; 149) Zu- und Ausschalter für bestimmte Gruppen von Leuchtdioden (A, B) des LED-Clusters (1110, 1120) umfassen, wobei die Steuereinheit (13; 130; 139) mit den Zu- und Ausschaltern verbunden ist und die Zu- und Ausschalter von der Steuereinheit (13; 130; 139) einstellbar sind.

8. Steh-, Pendel- oder Anbauleuchte (1; 10; 19) gemäss einem der vorangehenden Ansprüche, bei der die Adaptionseinheit (14; 140; 149) einen Helligkeitsregler zum Regeln der Abstrahlhelligkeit des Leuchtmittels (11; 110; 119) umfasst, wobei die Steuereinheit (13; 130; 139) mit dem Helligkeitsregler verbunden ist und der Helligkeitsregler von der Steuereinheit (13; 130; 139) einstellbar ist.

9. Steh-, Pendel- oder Anbauleuchte (1; 10; 19) gemäss einem der vorangehenden Ansprüche, bei der die Adaptionseinheit (14; 140; 149) einen Intensitätsregler zum Regeln der Abstrahlintensität des Leuchtmittels (11; 110; 119) umfasst, wobei die Steuereinheit (13; 130; 139) mit dem Intensitätsregler verbunden ist und der Intensitätsregler von der Steuereinheit (13; 130; 139) einstellbar ist.

## Claims

1. Floor, pendant or surface-mounted luminaire (1; 10; 19) having a support structure (16; 160; 169) and a housing (18) attached to the support structure (16; 160; 169), in which housing a lamp (11; 110; 119), an adapting unit (14; 140; 149) for adapting emission characteristics of light (15; 150; 159) generated by the lamp (11; 110; 119), a determining unit (12; 120; 129) for determining an environmental parameter of the surrounding region of the luminaire (1; 10; 19), and a control unit (13; 130; 139) for automatically evaluating the environmental parameter and for adjusting the adapting unit (14; 140; 149) on the basis of the evaluated environmental parameter are arranged, **characterized in that** the housing (18) forms a unit together with the lamp (11; 110; 119), the adapting unit (14; 140; 149), the determining unit (12; 120; 129) and the control unit (13; 130; 139), the control unit (13; 130; 139) is designed to derive a distance between the lamp (11; 110; 119) and a height-adjustable surface from the environmental parameter, the determining unit measuring a first distance (z1) at a first position of the surface and a second distance (z2) at a second position of the surface, which is adjusted in height in relation to the first position, by means of a measuring device, and the control unit (13; 130; 139) automatically adjusts the adapting unit (14; 140; 149) based on the derived distances (z1; z2).

2. Floor, pendant or surface-mounted luminaire (1; 10; 19) according to claim 1, which is designed such that the surface corresponds to a table surface, a floor and/or a ceiling.

3. Floor, pendant or surface-mounted luminaire (1; 10; 19) according to claim 3, wherein the measuring device (12; 120; 129) of the determining unit (12; 120; 129) comprises a light module.

4. Floor, pendant or surface-mounted luminaire (1; 10; 19) according to either claim 3 or claim 4, wherein the measuring device (12; 120; 129) of the determining unit (12; 120; 129) comprises an ultrasonic module.

5. Floor, pendant or surface-mounted luminaire (1; 10; 19) according to any of the preceding claims, in which the determining unit (12; 120; 129) has an interface (17) to a height-adjustable table (13; 130; 139), via which interface a signal representing a current table height can be transmitted as an environmental parameter from the height-adjustable table (13; 130; 139) to the luminaire (1; 10; 19), wherein the control unit (13; 130; 139) is designed to derive the distance between the lamp (11; 110; 119) and the surface from the environmental parameter regarding the table height.

6. Floor, pendant or surface-mounted luminaire (1; 10; 19) according to any of the preceding claims, in which the adapting unit (14; 140; 149) comprises a reflector, wherein the control unit (13; 130; 139) is connected to the reflector and the reflector can be adjusted by the control unit (13; 130; 139).

7. Floor, pendant or surface-mounted luminaire (1; 10; 19) according to any of the preceding claims, in which the lamp (11; 110; 119) comprises an LED cluster (1110, 1120) and the adapting unit (14; 140; 149) comprises on and off switches for specific groups of light emitting diodes (A, B) of the LED cluster (1110, 1120), wherein the control unit (13; 130; 139) is connected to the on and off switches and the on and off switches can be adjusted by the control unit (13; 130; 139).

8. Floor, pendant or surface-mounted luminaire (1; 10; 19) according to any of the preceding claims, in which the adapting unit (14; 140; 149) comprises a brightness regulator for regulating the radiation brightness of the lamp (11; 110; 119), wherein the control unit (13; 130; 139) is connected to the brightness regulator and the brightness regulator can be adjusted by the control unit (13; 130; 139).

9. Floor, pendant or surface-mounted luminaire (1; 10; 19) according to any of the preceding claims, in which the adapting unit (14; 140; 149) comprises an intensity regulator for regulating the radiation intensity of the lamp (11; 110; 119), wherein the control unit (13; 130; 139) is connected to the intensity regulator and the intensity regulator can be adjusted by the control unit (13; 130; 139).

## Revendications

1. Lampadaire, luminaire suspendu ou luminaire encastré (1 ; 10 ; 19) comportant une structure porteuse (16 ; 160 ; 169) et un boîtier (18) fixé à la structure porteuse (16 ; 160 ; 169), dans lequel sont disposés un moyen d'éclairage (11 ; 110 ; 119), une unité d'adaptation (14 ; 140 ; 149) permettant d'adapter les caractéristiques de rayonnement de la lumière (15 ; 150 ; 159) générée au moyen du moyen d'éclairage (11 ; 110 ; 119), une unité de détermination (12 ; 120 ; 129) permettant de déterminer un paramètre d'environnement de l'environnement du lampadaire/luminaire (1 ; 10 ; 19) et une unité de commande (13 ; 130 ; 139) permettant d'évaluer automatiquement le paramètre d'environnement et de régler l'unité d'adaptation (14 ; 140 ; 149) sur la base du paramètre d'environnement évalué, **caractérisé en ce que** le boîtier (18) forme une unité conjointement avec le moyen d'éclairage (11 ; 110 ; 119), l'unité d'adaptation (14 ; 140 ; 149), l'unité de détermination (12 ; 120 ; 129) et l'unité de commande (13 ; 130 ; 139), l'unité de commande (13 ; 130 ; 139) est conçue pour déduire, du paramètre d'environnement, une distance entre le moyen d'éclairage (11 ; 110 ; 119) et une surface réglable en hauteur, l'unité de détermination mesurant, au moyen d'un dispositif de mesure, une première distance (z1) à une première position de la surface et une seconde distance (z2) à une seconde position de la surface qui est réglée en hauteur par rapport à la première position, et l'unité de commande (13 ; 130 ; 139) règle automatiquement l'unité d'adaptation (14 ; 140 ; 149) sur la base des distances (z1 ; z2) déduites.

2. Lampadaire, luminaire suspendu ou luminaire encastré (1 ; 10 ; 19) selon la revendication 1, lequel est conçu de manière à ce que la surface corresponde à une surface de table, un sol et/ou un plafond.

3. Lampadaire, luminaire suspendu ou luminaire encastré (1 ; 10 ; 19) selon la revendication 3, dans lequel le dispositif de mesure (12 ; 120 ; 129) de l'unité de détermination (12 ; 120 ; 129) comprend un module de lumière.

4. Lampadaire, luminaire suspendu ou luminaire encastré (1 ; 10 ; 19) selon la revendication 3 ou 4, dans lequel le dispositif de mesure (12 ; 120 ; 129) de l'unité de détermination (12 ; 120 ; 129) comprend un module d'ultrasons.

5. Lampadaire, luminaire suspendu ou encastré (1 ; 10 ; 19) selon l'une des revendications précédentes, dans lequel l'unité de détermination (12 ; 120 ; 129) présente une interface (17) avec une table réglable en hauteur (13 ; 130 ; 139), par laquelle un signal représentant une hauteur de table réelle est transmis comme paramètre d'environnement de la table réglable en hauteur (13 ; 130 ; 139) au lampadaire/luminaire (1 ; 10 ; 19), l'unité de commande (13 ; 130 ; 139) étant conçue pour déduire la distance entre le moyen d'éclairage (11 ; 110 ; 119) et la surface à partir du paramètre d'environnement relatif à la hauteur de table.

6. Lampadaire, luminaire suspendu ou luminaire encastré (1 ; 10 ; 19) selon l'une des revendications précédentes, dans lequel l'unité d'adaptation (14 ; 140 ; 149) comprend un réflecteur, l'unité de commande (13 ; 130 ; 139) étant reliée au réflecteur et le réflecteur pouvant être réglé par l'unité de commande (13 ; 130 ; 139).

7. Lampadaire, luminaire suspendu ou luminaire encastré (1 ; 10 ; 19) selon l'une des revendications précédentes, dans lequel le moyen d'éclairage (11 ; 110 ; 119) comprend un groupe de DEL (1110, 1120) et l'unité d'adaptation (14 ; 140 ; 149) comprend des interrupteurs marche/arrêt pour certains groupes de diodes électroluminescentes (A, B) du groupe de DEL (1110, 1120), l'unité de commande (13 ; 130 ; 139) étant reliée aux interrupteurs marche/arrêt et les interrupteurs marche/arrêt pouvant être réglés par l'unité de commande (13 ; 130 ; 139).

8. Lampadaire, luminaire suspendu ou luminaire encastré (1 ; 10 ; 19) selon l'une des revendications précédentes, dans lequel l'unité d'adaptation (14 ; 140 ; 149) comprend un régulateur de luminosité permettant de régler la luminosité de rayonnement du moyen d'éclairage (11 ; 110 ; 119), l'unité de commande (13 ; 130 ; 139) étant reliée au régulateur de luminosité et le régulateur de luminosité pouvant être réglé par l'unité de commande (13 ; 130 ; 139).

9. Lampadaire, luminaire suspendu ou luminaire encastré (1 ; 10 ; 19) selon l'une des revendications précédentes, dans lequel l'unité d'adaptation (14 ; 140 ; 149) comprend un régulateur d'intensité permettant de régler l'intensité de rayonnement du moyen d'éclairage (11 ; 110 ; 119), l'unité de commande (13 ; 130 ; 139) étant reliée au régulateur d'intensité et le régulateur d'intensité pouvant être réglé par l'unité de commande (13 ; 130 ; 139).
